Europäisches Patentamt

European Patent Office

Office européen des brevets

(19)

(11) EP 0 821 992 A1

(12) DEMANDE DE BREVET EUROPEEN

(43) Date de publication:
04.02.1998 Bulletin 1998/06

(51) Int Cl.6: **B01D 53/053**, B01D 53/047,
B01D 53/04

(21) Numéro de dépôt: 97401783.2

(22) Date de dépôt: 24.07.1997

(84) Etats contractants désignés:
AT BE CH DE DK ES FI FR GB GR IE IT LI LU MC
NL PT SE

(30) Priorité: 30.07.1996 FR 9609592

(71) Demandeur: L'AIR LIQUIDE, SOCIETE ANONYME
POUR
L'ETUDE ET L'EXPLOITATION DES PROCEDES
GEORGES CLAUDE
75321 Paris Cédex 07 (FR)

(72) Inventeur: **Andreani, Philippe**
**94270 LE Kremlin Bicetre (FR)**

(74) Mandataire: **Le Moenner, Gabriel et al**
**L'Air Liquide S.A.,**
**DSPI,**
**Service Brevets et Marques,**
**75 Quai d'Orsay**
**75321 Paris Cedex 07 (FR)**

(54) **Procédé et appareil de traitement d'un gaz par adsorption avec un debit variable de production**

(57)     Ce procédé met en oeuvre un cycle sur un mo-noadsorbeur (1) relié d'une part à au moins une capacité (2, 3) par une conduite (8, 10) munie d'une vanne à ouverture variable (9, 11), et d'autre part à une machine réversible (4) de compression/pompage couplée à un variateur de vitesse (5).

Application notamment à la production d'oxygène à débit variable à partir d'air atmosphérique.

FIG.1

EP 0 821 992 A1

## Description

La présente invention est relative à un procédé de traitement d'un gaz par adsorption à variation de pression entre une haute pression de cycle supérieure à la pression atmosphérique et une basse pression de cycle inférieure à la pression atmosphérique. Elle s'applique en particulier à la production d'oxygène à partir d'air atmosphérique.

L'invention a pour but de fournir un procédé et un appareil permettant d'utiliser un adsorbeur unique, ou monoadsorbeur, dans des situations où le débit de production est fortement variable, notamment dans le cas où l'on doit, pendant certains intervalles de temps, passer d'une marche nominale à une marche réduite, avec la possibilité de conserver constantes les pressions extrêmes du cycle.

A cet effet, l'invention a pour objet un procédé de traitement d'un gaz par adsorption à variation de pression entre une haute pression de cycle supérieure à la pression atmosphérique et une basse pression de cycle inférieure à la pression atmosphérique, caractérisé en ce que :

- on utilise un adsorbeur unique associé à au moins une capacité et à une machine réversible de compression et de pompage;
- on met en oeuvre, dans l'adsorbeur, un cycle comprenant une phase de production, une phase de régénération comprenant une étape de purge par pompage à contre-courant jusqu'à la basse pression du cycle, et une phase de recompression comprenant une étape de recompression finale à co-courant; et
- lorsque le débit de production est réduit (respectivement augmenté) d'une première valeur DN à une seconde valeur nettement différente D, on réduit (respectivement on augmente) la vitesse de rotation de la machine pendant la phase de production et les étapes de purge et de recompression finale, on réduit (respectivement on augmente) l'aire de passage du gaz de production sortant de l'adsorbeur pendant la phase de production, et on augmente (respectivement on réduit) les durées de la phase de production et des étapes de purge et de recompression finale.

L'invention a également pour objet un appareil permettant la mise en oeuvre d'un procédé tel que défini ci-dessus. Selon un aspect de l'invention, cet appareil comprend :

- un adsorbeur relié par une extrémité, dite sortie, à au moins une première capacité par une première conduite équipée d'une vanne à ouverture variable;
- une machine réversible de compression et de pompage, reliée à l'autre extrémité, dite entrée, de l'adsorbeur; et

- un variateur de vitesse couplé à la machine réversible.

Un exemple de mise en oeuvre de l'invention va maintenant être décrit à titre illustratif et non limitatif en regard du dessin annexé, sur lequel :

- la Figure 1 représente schématiquement un appareil de production d'oxygène conforme à l'invention;
- la Figure 2 est un diagramme qui illustre un exemple de cycle mis en oeuvre avec l'appareil de la Figure 1, en marche nominale;
- la Figure 3 est un diagramme correspondant à la figure 2 et illustrant le régime de la machine tournante réversible ; et
- les Figures 4 et 5 sont des diagrammes correspondant respectivement aux Figures 2 et 3 mais relatifs à une marche réduite de l'appareil.

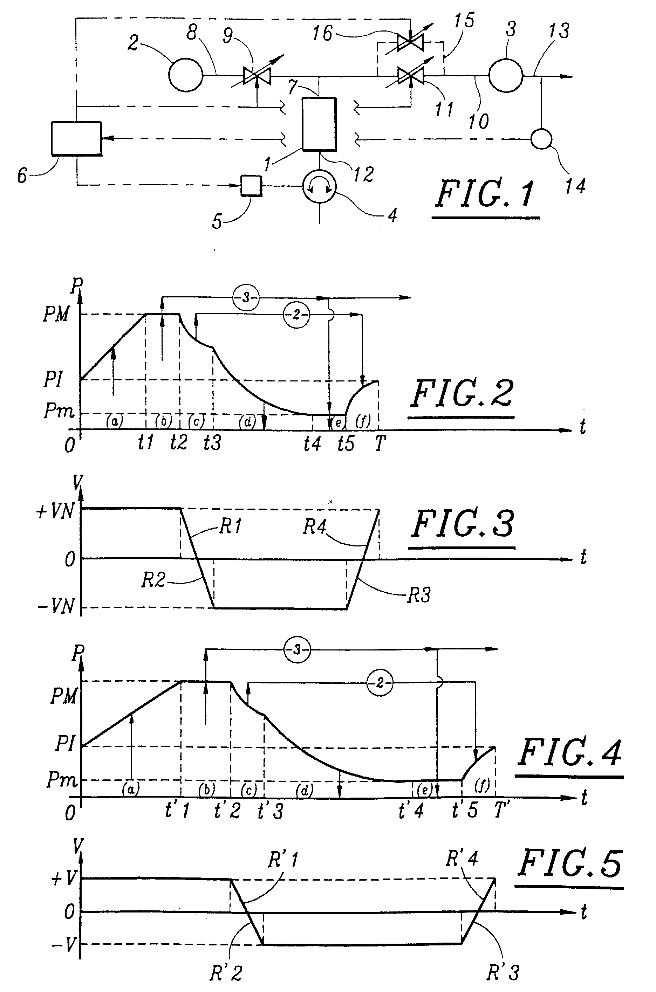

L'installation représentée à la Figure 1 est destinée à produire de l'air enrichi en oxygène, ou oxygène impur (appelé "oxygène" dans un but de simplicité), à une pureté typiquement comprise entre 90 et 95% environ, à partir d'air atmosphérique.

Dans le mode de réalisation représenté, l'installation comprend essentiellement un adsorbeur unique 1, deux capacités 2 et 3, une machine réversible 4 de compression/pompage multi-lobée, avantageusement du type ROOTS, un variateur de vitesse 5 couplé à la machine 4, et une unité de pilotage électronique 6. La sortie 7 de l'adsorbeur 1, c'est-à-dire son extrémité par laquelle sort le gaz de production, est reliée à la capacité 2 par l'intermédiaire d'une conduite 8 équipée d'une vanne 9 à ouverture variable. La sortie 7 est également reliée à la capacité 3 par l'intermédiaire d'une autre conduite 10 équipée d'une autre vanne 11 à ouverture variable.

Parmi les deux orifices d'aspiration/refoulement de la machine 4, l'un est directement relié à l'entrée 12 de l'adsorbeur, qui est l'extrémité de celui-ci opposée à la sortie 7, et l'autre est directement reliée à l'atmosphère. Par "directement", on entend qu'aucune vanne n'est prévue sur le trajet correspondant.

Une conduite de production 13 part de la capacité 3, et un débitmètre 14 mesure le débit de gaz de production véhiculé par cette conduite 13. Le débitmètre 14 envoie à l'unité de pilotage 6 un signal représentatif du débit mesuré, et l'unité 6 envoie au variateur de vitesse 5 et aux vannes 9 et 11 des signaux qui, à partir de cette information, règlent la vitesse de rotation de la machine 4 ainsi que le degré d'ouverture des vannes 9 et 11, d'une manière qui sera décrite plus en détail ci-dessous.

Au moyen de l'appareil ainsi décrit, on met en oeuvre, dans l'adsorbeur 1, pour la production d'oxygène à un débit nominal DN, un cycle tel que celui représenté, à titre illustratif, sur la Figure 2. On peut choisir une durée de cycle T de 1 minute à quelques minutes.

Dans l'exemple considéré, T=90s. Sur la Figure 2, où les temps $t$ sont portés en abscisses et les pressions absolues P en ordonnées, les traits orientés par des flèches indiquent les mouvements et destinations des courants gazeux hors de et vers l'adsorbeur.

Un exemple de cycle complet sera maintenant décrit en référence aux Figures 1 à 3. Le cycle évolue entre deux pressions extrêmes, à savoir une pression haute ou maximale PM comprise entre la pression atmosphérique et $2 \times 10^5$ Pa environ et plus généralement entre 1 et $1,6 \times 10^5$ Pa environ, et une pression basse ou minimale Pm comprise entre 0,2 et $6,5 \times 10^5$ Pa environ.

Le cycle comporte les étapes successives suivantes :

(a) De t = 0 à t1 (= 20 s), une étape de recompression finale à co-courant au moyen d'air atmosphérique à traiter. Au cours de cette étape, la machine 4 fonctionne en compresseur à sa vitesse nominale VN (Figure 3), les vannes 9 et 11 sont fermées, et la pression augmente depuis une pression intermédiaire PI jusqu'au voisinage de la pression haute PM ;

(b) de t1 à t2 (= 30 s), une étape de production sensiblement isobare s'achevant à la pression haute de cycle PM. Au cours de cette étape, la machine 4 fonctionne encore en compresseur à la vitesse VN, la vanne 11 est ouverte, et du gaz de production (oxygène impur) est soutiré par la sortie 7 de l'adsorbeur et envoyé dans la capacité 3 ;

(c) de t2 à t3 (= 40 s), une étape de première décompression à co-courant jusqu'à une pression intermédiaire haute, supérieure à PI. Au cours de cette étape, la vanne 11 est fermée et la vanne 9 est ouverte, de sorte que du gaz ayant pratiquement la composition du gaz de production est envoyé de la sortie 7 de l'adsorbeur dans la capacité 2.

Au cours de cette étape, on procède à l'inversion de sens de rotation de la machine 4, suivant une rampe de décélération R1 puis une rampe d'accélération en sens inverse R2 (Figure 3), ces deux rampes pouvant avoir ou non la même pente. A l'instant t3, la vitesse de rotation de la machine 4 est - VN.

(d) de t3 à t4 (= 70 s), une étape de purge par pompage à contre-courant, jusqu'à la basse pression Pm. Au cours de cette étape, du gaz riche en constituants fortement adsorbables (azote et impuretés) est extrait à contre-courant de l'entrée 12 de l'adsorbeur et rejeté dans l'atmosphère environnante. Au cours de cette étape également, la machine 4 fonctionne en pompe à vide à la vitesse - VN, et les vannes 9 et 11 sont fermées;

(e) de t4 à t5 (= 80 s), une étape d'élution à contre-courant/pompage sensiblement isobare à la pression basse Pm par du gaz de production. Au cours de cette étape, la vanne 11 est ouverte, à un degré d'ouverture différent de ce qu'il est au cours de l'étape (b) de production, et du gaz de production provenant de la capacité 3 est envoyé à contre-courant dans l'adsorbeur, avec simultanément pompage à contre-courant par la machine 4 tournant à la vitesse - VN.

(f) de t5 à T, une étape de première recompression à contre-courant jusqu'à la pression intermédiaire PI par du gaz provenant de la capacité d'équilibrage 2. Au cours de cette étape, la vanne 11 est fermée et la vanne 9 est ouverte, à un degré d'ouverture généralement différent de ce qu'il est au cours de l'étape (c) de première décompression à co-courant. par suite, du gaz provenant de la capacité 2 pénètre à contre-courant par la sortie 7 de l'adsorbeur. Au cours de cette étape également, on procède à une nouvelle inversion du sens de rotation de la machine 4, suivant une rampe de décélération R3 puis une rampe d'accélération en sens inverse R4 (Figure 3), ces deux rampes pouvant avoir ou non la même pente. A l'instant T, la vitesse de rotation de la machine 4 est + VN.

L'étape (b) constitue la phase de production de l'adsorbeur; les étapes (c), (d) et (e) constituent la phase de régénération de l'adsorbeur; et les étapes (f) et (a) constituent la phase de recompression de l'adsorbeur.

Lorsque la demande en oxygène de production, sur la conduite 13, diminue substantiellement pour passer du débit nominal DN à un débit réduit D=$\alpha$.DN ($\alpha$<1), cette variation est détectée par le débitmètre 14, et l'unité de pilotage 6 reçoit l'information correspondante.

Cette unité de pilotage 6 agit alors simultanément sur le variateur de vitesse 5 et sur les vannes 9 et 11 (degré d'ouverture et instants de commutation entre les positions ouverte et fermée) pour modifier le cycle de la manière illustrée aux Figures 4 et 5.

D'une part, la vitesse de rotation de la machine 4, pendant les étapes (a) de recompression finale, (b) de production, (d) de purge et (e) d'élution, est réduite d'un facteur R qui sera défini ci-dessous.

La vitesse de rotation passe donc de + R. VN pour les étapes (a) et (b) à - R. VN pour les étapes (d) et (e).

D' autre part, les durées des étapes (a), (b), (d) et (e) sont allongées en les multipliant par 1/R. Au contraire, les étapes (c) de première décompression à co-courant et (f) de première recompression à contre-courant ont une durée inchangée par rapport à la marche nominale.

Par conséquent, lors des étapes (c) et (f), la machine 4 doit passer, dans le même intervalle de temps que précédemment, de la vitesse de rotation + R. VN à la vitesse de rotation - R. VN ou inversement. par conséquent, le variateur 5 commande la décélération et l'accélération de la machine suivant des rampes R'1, R'2, R'3 et R'4 modifiées en conséquence (Figure 5).

Enfin, pour maintenir les pressions PM et Pm en marche réduite, les degrés d'ouverture des vannes 9 et 11 sont réduits de manière correspondante pendant les étapes (b) et (e).

On obtient de cette manière le cycle illustré sur la Figure 4, qui comporte les mêmes étapes (a) à (f) que celui de la Figure 2, mais avec les relations suivantes :

- période du cycle : T' = T/a
- durées des étapes (a), (b), (d) et (e) : t'1, t'2-t'1, t'4-t'3, t'5-t'4, égales aux durées correspondantes en marche nominale, multipliées par le même facteur 1/R.

Plus précisément, si la demande de gaz de production devient ∝ DN, dans l'exemple considéré où t3-t2 (=c) = T-t5 (=f) = 10 s :

$$R = (T-20)/(T/\alpha)-20).$$

En variante, comme indiqué en trait interrompu à la Figure 1, on peut prévoir aux bornes de la vanne 11 une dérivation 15 munie d'une vanne supplémentaire 16 à ouverture variable pilotée par l'unité 6. Dans ce cas, l'une des deux vannes 11 et 16 est ouverte en phase de production (b), et l'autre pendant l'étape d'élution (e). En l'absence d'une telle dérivation 15, l'ouverture de la vanne 11 est différente pendant les étapes (b) et production et (e) d'élution. En variante, également, l'élution (phase e) peut être réalisée avec du gaz provenant de la capacité 3, la recompression (phase f) étant assurée au moins en partie par du gaz de la capacité 2.

Il est à noter que la vitesse nominale de rotation de la machine 4 peut être différente suivant son sens de rotation. On applique alors les formules indiquées plus haut aux deux valeurs en question pour calculer les vitesses de rotation en marche réduite.

## Revendications

1. Procédé de traitement d'un gaz par adsorption à variation de pression entre une haute pression de cycle (PM) supérieure à la pression atmosphérique et une basse pression de cycle (Pm) inférieure à la pression atmosphérique, dans lequel :

   - on utilise un adsorbeur (1) associé à au moins une capacité (2, 3) et à une machine réversible (4) de compression et de pompage;
   - on met en oeuvre, dans l'adsorbeur, un cycle comprenant une phase (b) de production, une phase de régénération comprenant une étape (d) de purge par pompage à contre-courant jusqu'à la basse pression du cycle, et une phase de recompression comprenant une étape (a) de recompression finale à co-courant; et
   - lorsque le débit de production est réduit (respectivement augmenté) d'une première valeur DN à une seconde valeur nettement différente D, on réduit (respectivement on augmente) la vitesse de rotation de la machine (4) pendant la phase de production (b) et les étapes (d) de purge et (a) de recompression finale, on réduit (respectivement on augmente) l'aire de passage du gaz de production sortant de l'adsorbeur (1) pendant la phase de production (b), et on augmente (respectivement on réduit) les durées de la phase de production (b) et des étapes (d) de purge et (a) de recompression finale.

2. Procédé selon la revendication 1, caractérisé en ce que :

   - la phase de régénération comprend une étape finale (e) d'élution à contre-courant/pompage au moins en partie à la basse pression (Pm) du cycle, dans laquelle du gaz stocké dans une première capacité (3) est envoyé à contre-courant dans l'adsorbeur (1) et, simultanément, du gaz est pompé à contre-courant de cet adsorbeur; et
   - lorsque le débit de production est réduit (respectivement augmenté) de ladite première valeur DN à ladite seconde valeur D, pendant ladite étape (e), on réduit (respectivement on augmente) la vitesse de rotation de la machine (4) ainsi que l'aire de passage de gaz entre l'adsorbeur (1) et la première capacité (3), et on augmente (respectivement on réduit) la durée de l'étape (e) d'élution/pompage.

3. Procédé suivant la revendication 1 ou la revendication 2, caractérisé en ce que :

   - la phase de régénération comprend une étape (c) de première décompression à co-courant, dans laquelle du gaz passe de l'adsorbeur dans une deuxième capacité (2), et la phase de recompression comprend une étape (f) de première recompression à contre-courant au moyen de gaz provenant de cette capacité; et
   - lorsque le débit de production est réduit (respectivement augmenté) de ladite première valeur DN à ladite seconde valeur D, on maintient sensiblement constante la durée des étapes (c) de première décompression à co-courant et (f) de première recompression à contre-courant.

4. Procédé suivant la revendication 3, caractérisé en ce que :

   - on inverse le sens de rotation de la machine réversible (4) pendant les étapes (c) de première décompression à co-courant et (f) de première recompression à contre-courant; et
   - lorsque le débit de production est réduit (respectivement augmenté) de ladite première valeur DN à ladite seconde valeur D, on modifie les pentes des rampes (R1 à R4) de décélération et d'accélération de la machine réversible pendant les inversions.

5. Procédé suivant la revendication 3 ou 4, caractérisé en ce que, lorsque le débit de production est réduit (respectivement augmenté) de ladite première valeur DN à ladite seconde valeur D, on maintient sensiblement constante l'aire de passage de gaz entre l'adsorbeur (1) et la deuxième capacité (2) pendant les étapes (c) de première décompression à co-courant et (f) de première recompression à contre-courant.

6. Appareil de traitement d'un gaz par adsorption à variation de pression entre une haute pression de cycle (PM) supérieure à la pression atmosphérique et une basse pression de cycle (Pm) inférieure à la pression atmosphérique, comprenant :

   - un adsorbeur (1) relié par une extrémité (7), dite sortie, à au moins une première capacité (2; 3) par une première conduite (8; 10) équipée d'une vanne à ouverture variable (9; 11);
   - une machine réversible (4) de compression et de pompage, reliée à l'autre extrémité (12), dite entrée, de 1' adsorbeur; et
   - un variateur de vitesse (5) couplé à la machine réversible.

7. Appareil suivant la revendication 6, caractérisé en ce que l'adsorbeur (1) a sa sortie (7) également reliée à une seconde capacité (3) par une seconde conduite (10; 8) équipée d'une vanne à ouverture variable (11, 9).

8. Appareil suivant la revendication 6 ou 7, caractérisé en ce que ladite conduite (10), comporte, aux bornes de sa vanne à ouverture variable (11), une dérivation (15) munie d'une autre vanne, notamment à ouverture variable (16).

9. Appareil suivant l'une quelconque des revendications 6 à 8, caractérisé en ce qu'il comprend une unité (6) de pilotage coordonné de la ou de chaque vanne à ouverture variable (9, 11, 16) et du variateur de vitesse (5).

10. Appareil suivant la revendication 9, caractérisé en ce que l'unité (6) comprend des moyens de réglage des pentes (R1 à R4) des rampes de décélération et d' accélération de la machine réversible (4) en fonction de la vitesse de rotation imposée par le variateur de vitesse (5).

*FIG.1*

*FIG.2*

*FIG.3*

*FIG.4*

*FIG.5*

**EP 0 821 992 A1**

Office européen des brevets

**RAPPORT DE RECHERCHE EUROPEENNE**

Numéro de la demande

EP 97 40 1783

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 561 865 A (MCCOMBS NORMAN R ET AL) 31 décembre 1985 <br> * colonne 3, ligne 56 - colonne 4, ligne 6 * <br> * colonne 8, ligne 16 - colonne 9, ligne 42; figures 4-6 * <br> --- | 1,2,4-9 | B01D53/053 <br> B01D53/047 <br> B01D53/04 |
| A | EP 0 689 862 A (AIR LIQUIDE) 3 janvier 1996 <br> * colonne 1, ligne 32 - colonne 3, ligne 23; figures 3-7 * <br> --- | 1,5 | |
| A | FR 2 138 663 A (SULZER AG) 5 janvier 1973 <br> * page 3, ligne 15 - ligne 35; figure 1 * <br> --- | 1,6 | |
| A | US 5 370 728 A (LASALA KIMBERLY A ET AL) 6 décembre 1994 <br> * colonne 4, ligne 16 - colonne 8, ligne 38; figure 1 * <br> --- | 1,2,4-8 | |
| A | GB 2 003 742 A (BOC LTD) 21 mars 1979 <br> * page 2, ligne 44 - page 3, ligne 44; figures 1,2 * <br> ----- | 1,6,9 | DOMAINES TECHNIQUES RECHERCHES (Int.Cl.6) <br><br> B01D |

Le présent rapport a été établi pour toutes les revendications

| Lieu de la recherche | Date d'achèvement de la recherche | Examinateur |
|---|---|---|
| LA HAYE | 23 octobre 1997 | Bogaerts, M |